(19) Europäisches Patentamt / European Patent Office / Office européen des brevets

(11) **EP 4 699 821 A1**

(12) **EUROPEAN PATENT APPLICATION**
published in accordance with Art. 153(4) EPC

(43) Date of publication:
**25.02.2026 Bulletin 2026/09**

(21) Application number: **23934137.3**

(22) Date of filing: **25.10.2023**

(51) International Patent Classification (IPC):
**B60C 11/12** (2006.01)

(52) Cooperative Patent Classification (CPC):
**B60C 11/03; B60C 11/12**

(86) International application number:
**PCT/JP2023/038578**

(87) International publication number:
**WO 2024/218996 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.04.2023 JP 2023069595**

(71) Applicant: **BRIDGESTONE CORPORATION**
**Chuo-ku**
**Tokyo 104-8340 (JP)**

(72) Inventors:
• **MATSUMOTO, Hiroyuki**
  **Tokyo 104-8340 (JP)**
• **KAJI, Yoshio**
  **Tokyo 104-8340 (JP)**
• **NOMURA, Hiroshi**
  **Tokyo 104-8340 (JP)**

(74) Representative: **Marks & Clerk LLP**
**15 Fetter Lane**
**London EC4A 1BW (GB)**

(54) **PNEUMATIC TIRE**

(57)    A pneumatic tire includes at least one land portion on a tread surface. A plurality of micro sipes are disposed in at least one of the land portions. The micro sipes each have a first element and a second element extending in a direction different from the first element from one end of the first element. An extension length of the second element is shorter than an extension length of the first element. One end of the first element and one end of the second element are in communication. The other end of the first element terminates within the land portion. The other end of the second element terminates within the land portion. A minimum sipe depth h2 in the extension direction of the second element is smaller than a maximum sipe depth h1 in the extension direction of the first element.

FIG. 1

**Description**

TECHNICAL FIELD

The present disclosure relates to a pneumatic tire.

BACKGROUND

Conventionally, in pneumatic tires, particularly in studless tires, fine grooves called sipes have been provided in the land portions of the tread portion in order to improve on-ice gripping performance. By means of these sipes, water that wells up as a result of melting of the icy road surface at the tire contact patch can be discharged to the outside of the contact patch, thereby enabling improvement of on-ice gripping performance.

Techniques have been proposed in which sipes are arranged at high density while suppressing a decrease in rigidity of the land portion, thereby aiming to improve on-ice gripping performance (for example, Patent Literature (PTL) 1).

CITATION LIST

Patent Literature

PTL 1: JP 2005-186827 A

SUMMARY

(Technical Problem)

However, in PTL 1, the compatibility between the rigidity of the land portion and the discharge of water by the sipes is not sufficient, and there remains room for improvement in enhancing on-ice gripping performance.

Therefore, an object of the present disclosure is to provide a pneumatic tire with improved on-ice gripping performance.

(Solution to Problem)

The gist configuration of the present disclosure is as follows.

(1) A pneumatic tire comprises at least one land portion on a tread surface, wherein

a plurality of micro sipes are disposed in at least one of the land portions,
the micro sipes each have a first element and a second element extending in a direction different from the first element from one end of the first element,
an extension length of the second element is shorter than an extension length of the first element,
one end of the first element and one end of the second element are in communication,
the other end of the first element terminates within the land portion,
the other end of the second element terminates within the land portion, and
a minimum sipe depth $h2$ in the extension direction of the second element is smaller than a maximum sipe depth $h1$ in the extension direction of the first element.

Here, the "tread surface" refers to the surface of the tread, across the entire tire circumferential direction, that comes into contact with the road surface when the pneumatic tire is mounted on an applicable rim, inflated to the prescribed internal pressure, and subjected to the maximum load capability.

Further, "sipe" refers to a groove in which, when the tire is mounted on an applicable rim, inflated to the prescribed internal pressure, and in an unloaded state, the sipe width is 1 mm or less in a region accounting for 50% or more of the sipe depth. Here, the sipe depth is measured in a direction perpendicular to the tread surface in the above state, and the sipe width is measured in a direction parallel to the tread surface in a cross-section perpendicular to the extension direction of the sipe on the tread surface.

Moreover, "a direction different from the first element" means that, in a planar view of the tread surface, the direction of a straight line connecting both ends of the first element of the micro sipe and the direction of a straight line connecting both ends of the second element of the micro sipe are different directions. When the second element of the micro sipe extends in a direction different from the first element, there are cases where, in planar view, the first element inclines upward to the right and the second element inclines upward to the left or is vertical, and cases where the first element inclines upward to the left and the second element inclines upward to the right or is vertical.

Note that "sipe depths h1 and h2" refer to the depths in a state where the tire is mounted on an applicable rim, inflated to the prescribed internal pressure, and is unloaded.

In the present specification, "applicable rim" refers to the approved rim for the applicable size as described or to be described in the industrial standards effective in the region where the tire is produced and used, such as the JATMA YEAR BOOK of the Japan Automobile Tyre Manufacturers Association (JATMA) in Japan, the STANDARDS MANUAL of the European Tyre and Rim Technical Organisation (ETRTO) in Europe, and the YEAR BOOK of The Tire and Rim Association, Inc. (TRA) in the United States (that is, the term "rim" above includes, in addition to current sizes, sizes that may be included in the above industrial standards in the future. As an example of "sizes to be described in the future," sizes described as "FUTURE DEVELOPMENTS" in the 2013 edition of the ETRTO can be cited). However, in the case of sizes not described in the above industrial standards, it refers to a rim having a width corresponding to the bead width of the tire. Further, "prescribed internal pressure" refers to the air pressure (maximum air pressure) corresponding to the maximum load capability for a single tire of the applicable size and ply rating as described in the above JATMA and the like, and in the case of sizes not described in the above industrial standards, "prescribed internal pressure" refers to the air pressure (maximum air pressure) corresponding to the maximum load capability specified for each vehicle on which the tire is mounted. In addition, "maximum load" refers to the load corresponding to the above maximum load capability.

In the present specification, "groove" refers to a groove having a groove width (opening width) of 2 mm or more in a state where the tire is mounted on an applicable rim, inflated to the prescribed internal pressure, and is unloaded.

(Advantageous Effect)

According to the present disclosure, it is possible to provide a pneumatic tire with improved on-ice gripping performance.

BRIEF DESCRIPTION OF THE DRAWINGS

In the accompanying drawings:

FIG. 1: A diagram illustrating a first example of a land portion of a pneumatic tire according to one embodiment of the present disclosure.
FIG. 2: A diagram illustrating an example of a cross-section of a micro sipe.
FIG. 3: A diagram illustrating another example of a cross-section of a micro sipe.
FIG. 4: A diagram illustrating a second example of a land portion of a pneumatic tire according to one embodiment of the present disclosure.
FIG. 5: A diagram illustrating a third example of a land portion of a pneumatic tire according to one embodiment of the present disclosure.
FIG. 6: A diagram illustrating a fourth example of a land portion of a pneumatic tire according to one embodiment of the present disclosure.
FIG. 7: A tire width direction cross-sectional view illustrating an example of a tire structure.
FIG. 8: A tire width direction cross-sectional view illustrating another example of a tire structure.
FIG. 9: A diagram illustrating a land portion of Comparative Example 1 of Example 1.
FIG. 10: A diagram illustrating a sipe of Comparative Example 1 of Example 4.
FIG. 11: A diagram illustrating a sipe of Comparative Example 4 of Example 4.
FIG. 12: A diagram illustrating an example of a pattern to which the land portion is applied.
FIG. 13: A diagram illustrating an example of a pattern to which the land portion is applied.
FIG. 14: A diagram illustrating a land portion of Conventional Example 1 of Example 1.
FIG. 15: A diagram illustrating a land portion of Conventional Example 2 of Example 1.
FIG. 16: A diagram illustrating a land portion of Conventional Example 3 of Example 1.
FIG. 17: A diagram illustrating simulation results of Example 1.
FIG. 18: A diagram illustrating simulation results of Example 1.
FIG. 19: A diagram illustrating simulation results of Example 1.
FIG. 20: A diagram illustrating evaluation results of Comparative Example 1 and Conventional Example of Example 1.
FIG. 21: A diagram illustrating evaluation results of the effect of sipe spacing on the on-ice friction coefficient in Example 2.
FIG. 22: A diagram illustrating simulation results of the relationship between sipe density and block rigidity in Example 3.
FIG. 23: A diagram illustrating simulation results of the relationship between sipe density and block rigidity in Example 3.

FIG. 24: A diagram illustrating a land portion and simulation results of Comparative Example 2 of Example 3.

FIG. 25: A diagram illustrating a land portion and simulation results of Combined Example 1 of Example 3.

FIG. 26: A diagram illustrating a land portion and simulation results of Combined Example 2 of Example 3.

FIG. 27: A diagram illustrating a land portion of Comparative Example 3 of Example 3.

FIG. 28: A diagram illustrating calculation results of Example 3.

FIG. 29: A diagram illustrating a land portion of Comparative Example 3 of Example 4.

FIG. 30: A diagram illustrating simulation results of Example 4.

FIG. 31: A diagram illustrating simulation results of Example 4.

FIG. 32: A diagram illustrating evaluation results of Example 4.

FIG. 33: A diagram illustrating simulation results of Example 4.

FIG. 34: A diagram illustrating simulation results of Example 4.

FIG. 35: A diagram illustrating simulation results of Example 4.

FIG. 36: A diagram illustrating simulation results of Example 4.

FIG. 37: A diagram illustrating simulation results of Example 4.

Hereinafter, embodiments of the present disclosure will be exemplified and described in detail with reference to the drawings. The pneumatic tire according to one embodiment of the present disclosure (hereinafter also simply referred to as "tire") is not particularly limited in its internal structure. As one example, the tire includes a carcass extending toroidally between a pair of bead portions. As another example, the tire includes, on the tire radial outer side of the carcass, a reinforcement layer such as a belt layer, and a tread.

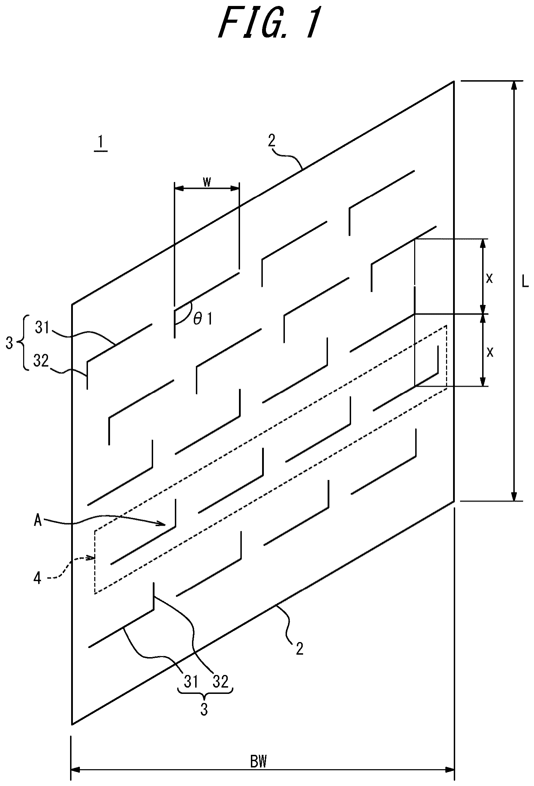

FIG. 1 is a diagram illustrating a first example of a land portion of a pneumatic tire according to one embodiment of the present disclosure. This tire has at least one land portion 1 on the tread surface. Although not particularly limited, in the illustrated example, the land portion 1 is a block defined by a circumferential main groove (not illustrated in FIG. 1) extending in the tire circumferential direction (for example, extending in the tire circumferential direction or extending at an inclination angle of 5° or less with respect to the tire circumferential direction) and a width direction groove (not illustrated in FIG. 1) extending at an inclination with respect to the tire width direction. In the illustrated example, the block is substantially parallelogram-shaped in a planar view. The land portion 1 has a width direction edge 2 extending at an inclination with respect to the tire width direction (by being defined by the width direction groove).

Further, in at least one of the land portions 1 of this tire, a plurality of micro sipes 3 are disposed. The width w (see FIG. 1) of the micro sipe 3 in the tire width direction is preferably not more than 1.2 times the maximum groove depth H of the groove defining the land portion 1 in which the micro sipe 3 is disposed (in this example, the deeper of the maximum groove depth of the circumferential main groove and the maximum groove depth of the width direction groove). Also, when the land portion 1 is a block as in the illustrated example, or when it is defined between circumferential main grooves, or when it is defined by a circumferential main groove and a tread edge, the width w of the micro sipe 3 in the tire width direction is preferably not more than 30% of the width (maximum width) BW of the land portion 1 in the tire width direction. For the micro sipe 3, when the width in the tire width direction is w (mm) and the depth (maximum depth) is h (mm), w×h is preferably not more than 150 (mm$^2$), more preferably not more than 100 (mm$^2$), and even more preferably not more than 50 (mm$^2$). The sipe width (opening width) of the micro sipe 3 can be not more than 0.5 mm, and the sipe depth (maximum depth) h can be not less than 3 mm.

As illustrated in FIG. 1, the micro sipe 3 has a first element (long side) 31 and a second element (short side) 32. In this example, the first element 31 extends in the same direction as the width direction edge 2 closest to the first element 31 (in the illustrated example, both are upward rightward (downward leftward)). The second element 32 extends from one end of the first element 31 in a direction different from the first element 31 (in the illustrated example, the second element 32 extends in the tire circumferential direction (illustrated as the vertical direction)). In the present embodiment, one end of the second element 32 is in communication with one end of the first element 31.

In the illustrated example, the first element 31 is linear. On the other hand, the first element 31 may be curved, or may be wavy having one or more bent portions, or may be zigzag-shaped having one or more bent portions. In the present embodiment, the other end of the first element 31 (the end not in communication with the second element 32) terminates within the land portion 1.

In the illustrated example, the second element 32 is linear. In the present embodiment, the extension length of the second element 32 is shorter than the extension length of the first element 31. Also, the other end of the second element 32 (the end not in communication with the first element 31) terminates within the land portion 1.

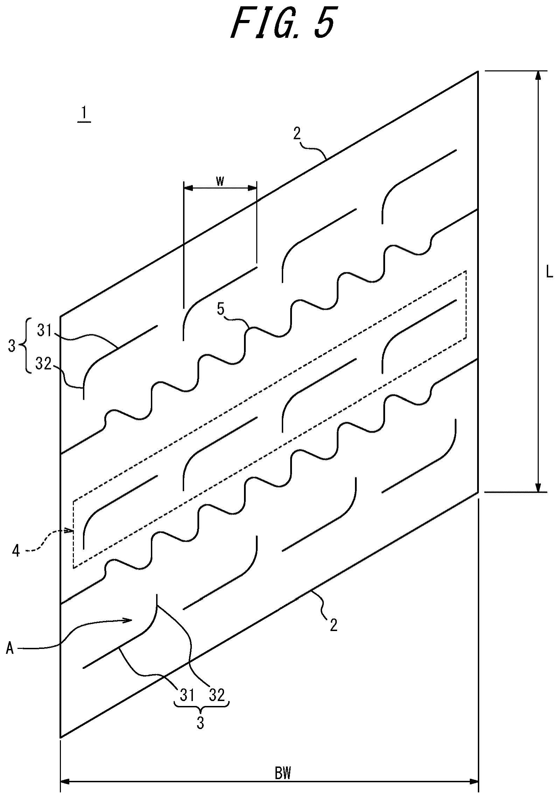

The communicating portion between the first element 31 and the second element 32 may be bent as illustrated, or may be arcuate (see FIG. 5). The bending angle θ1 of the second element 32 with respect to the first element 31 is preferably not less than 90°. This is because it is possible to prevent the formation of sharp corners and thereby avoid locations where rigidity decreases. On the other hand, the above angle θ1 is preferably not more than 170°.

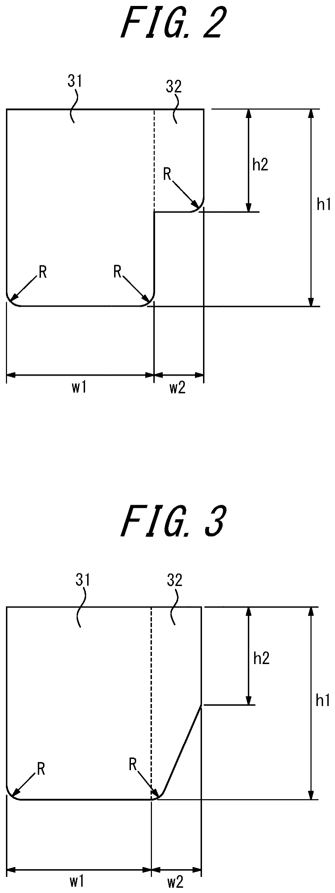

FIG. 2 is a diagram illustrating an example of a cross section of a micro sipe. In the present embodiment, the minimum sipe depth h2 in the extension direction of the second element 32 is smaller than the maximum sipe depth h1 in the extension direction of the first element 31. As a result, it is possible to reinforce the thin plate portion of the mold corresponding to the sipe used in tire manufacturing and make it less susceptible to buckling, while suppressing a decrease in the rigidity of the second element 32 and suppressing a decrease in the rigidity of the land portion 1, thereby effectively improving on-ice gripping performance. For the same reason, it is more preferable that $h2 \leq h1 \times 0.7$ is satisfied.

FIG. 3 is a diagram illustrating an example of a cross section of a micro sipe. As illustrated in FIG. 3, it is preferable that the second element 32 is formed such that the sipe depth becomes shallower toward the other end of the second element 32. In this case, the thin plate portion of the mold can be made even less susceptible to buckling. It is preferable that, in cross-sectional view, the portion near the communicating portion with the second element 32 at the deepest part of the first element 31 and the shallowest part of the second element 32 are connected by a smooth curve or straight line.

Also, as illustrated in FIGS. 2 and 3, it is preferable that the sipe bottom of the first element 31 is rounded (illustrated with a radius of curvature R). Further, as illustrated in FIG. 2, it is also preferable that the sipe bottom of the second element 32 is rounded. This is because it is possible to suppress the occurrence of cracks at the sipe bottom.

Here, as illustrated in FIG. 1, it is preferable that a plurality of (four in the illustrated example) micro sipes 3 are arranged along the tire width direction within the land portion 1, and that one or more (five in the illustrated example) micro sipe rows 4 are formed. This is because it is possible to densely arrange micro sipes 3, which have little effect on rigidity reduction, to enhance drainage performance and improve on-ice gripping performance while suppressing a decrease in rigidity. When the micro sipes 3 are projected in the tire circumferential direction, it is preferable that the micro sipes 3 do not overlap with adjacent micro sipes 3 in the same micro sipe row 4. Also, when the micro sipes 3 are projected in the tire width direction, it is preferable that there is a portion where the micro sipes 3 overlap with adjacent micro sipes 3 in the same micro sipe row 4. Further, it is preferable that there are no other sipes between adjacent micro sipes 3 in the same micro sipe row 4. Also, in one micro sipe row 4, the interval in the tire width direction between adjacent micro sipes 3 is preferably equal to or less than the width of the micro sipe 3 in the tire width direction. This is because it is possible to densely arrange micro sipes 3, which have little effect on rigidity reduction, to enhance drainage performance and improve on-ice gripping performance while suppressing a decrease in rigidity. It is also preferable to arrange a plurality of micro sipe rows 4 in the tire circumferential direction. This is because it is possible to densely arrange micro sipes 3, which have little effect on rigidity reduction, to enhance drainage performance and improve on-ice gripping performance while suppressing a decrease in rigidity. It is preferable that the first elements 31 of the plurality of micro sipes 3 constituting the plurality of micro sipe rows 4 all extend in the same direction.

It is preferable to have a first micro sipe row and a second micro sipe row, and that the first elements 31 of the micro sipes 3 constituting the first micro sipe row and the first elements 31 of the micro sipes 3 constituting the second micro sipe row 32 do not overlap at least partially when projected in the tire circumferential direction. This is because, by arranging them alternately, it is possible to achieve uniformity in the rigidity of the land portion 1. More preferably, the first elements 31 of the micro sipes 3 constituting the first micro sipe row and the first elements 31 of the micro sipes 3 constituting the second micro sipe row 32 do not have any overlapping portions when projected in the tire circumferential direction. This is because it is possible to achieve uniformity in the rigidity of the land portion 1.

Such alternate arrangement is preferably made between the first micro sipe row and the second micro sipe row that are adjacent in the tire circumferential direction.

Further, it is preferable that the other ends of the second elements 32 of the plurality of micro sipes 3 constituting the micro sipe row 4 are all located on one side (the same side) in the tire circumferential direction with respect to the first element 31 communicating with the second element 32. By adopting such a regular shape, it is possible to achieve uniformity in the rigidity of the land portion 1. It is preferable that the other ends of the second elements 32 of the micro sipes 3 constituting the micro sipe row 4 are disposed on the inner side of the land portion 1 with respect to the first element 31. In the micro sipe row 4 closest to the width direction edge 2, it is preferable that there are no other sipes or other grooves between the first element 31 of the micro sipe 3 and the width direction edge 2. Also, the interval (shortest distance between first elements 31) between micro sipe rows 4 adjacent in the tire circumferential direction is preferably not less than 3 mm, and preferably not more than 5H, more preferably not more than 4H, relative to the maximum groove depth H of the groove defining the land portion 1.

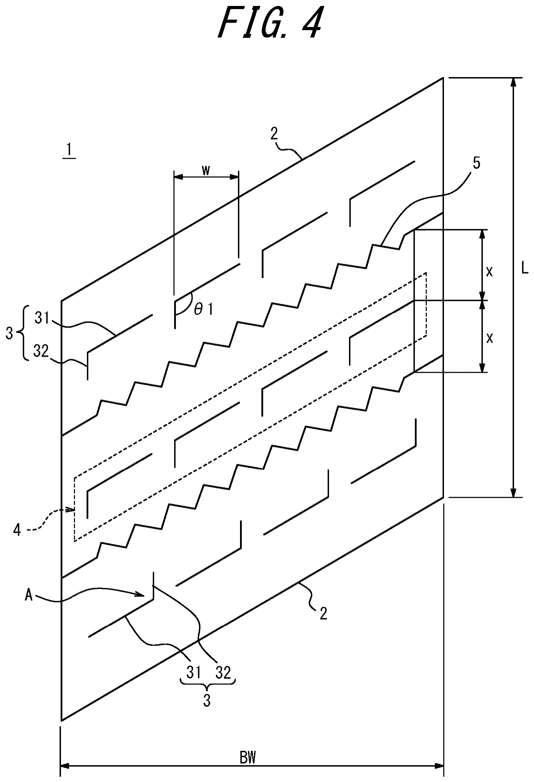

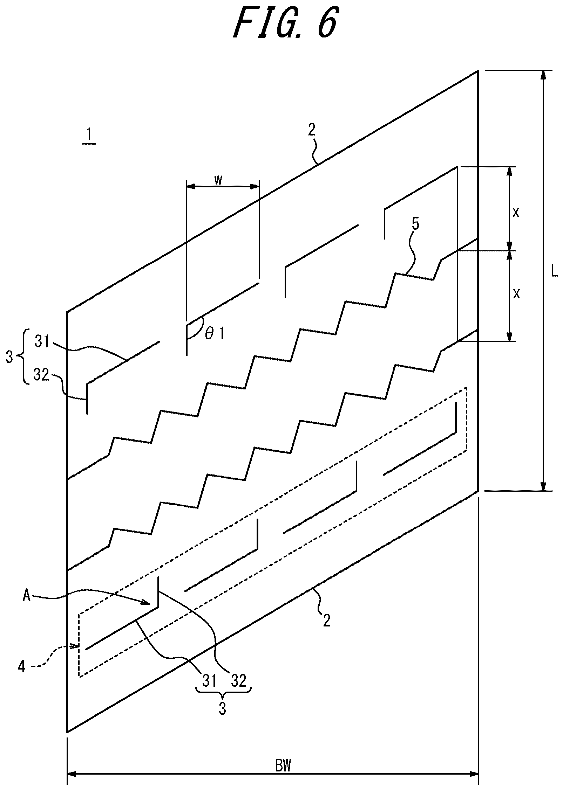

FIGS. 4 to 6 are diagrams each illustrating second to fourth examples of the land portion of a pneumatic tire according to one embodiment of the present disclosure. In the examples illustrated in FIGS. 4 to 6, one or more long sipes 5 extending in the tire width direction are further disposed within the land portion 1. The extension length of the long sipe 5 is longer than the extension length of the first element 31 of the micro sipe 3. By arranging such long sipes 5, drainage performance can be improved, and in combination with micro sipes 3, which have little effect on rigidity reduction, on-ice gripping performance can be further improved. Preferably, the extension length of the long sipe 5 is longer than twice the extension length of the first element 31 of the micro sipe 3, and more preferably longer than the total extension length of all the micro sipes 3 constituting the micro sipe row 4. In the illustrated example, both ends of the long sipe 5 extend to the ends of the block. In this way, drainage performance can be further improved. As illustrated in FIGS. 4 to 6, it is preferable that the long sipe 5 is disposed between micro sipe rows 4 adjacent in the tire circumferential direction. It is particularly preferable to have one to three long sipes extending in the tire width direction between micro sipe rows 4 adjacent in the tire circumferential direction. On the other hand, from the viewpoint of suppressing a decrease in the rigidity of the land portion 1, it is preferable that the number of long sipes 5 disposed between micro sipe rows 4 adjacent in the tire circumferential direction is not more than two. The example of FIG. 5 differs from the example of FIG. 4 in that the communicating portion between the first element 31 and the second element 32 is arcuate. Also, in the example of FIG. 4, the long sipe 5 is zigzag-shaped, whereas in the example of FIG. 5, the long sipe 5 is curved (sine wave-shaped). In the example of FIG. 6, two long sipes 5 are disposed between micro sipe rows 4 adjacent in the tire circumferential direction. The long sipe 5 may have a raised bottom portion partially (for example, at one or two locations). This is because it is possible to ensure the rigidity of the land portion 1. When the land portion 1 is defined by a circumferential main groove, it is preferable that at least one end of the long sipe 5 communicates with the circumferential main groove. This is because drainage performance can be improved.

Here, let the total sum of the projection lengths of the micro sipes 3 in the tire circumferential direction within one land portion 1 be $tw_m$ (mm), the total sum of the projection lengths of the long sipes 5 in the tire circumferential direction within one land portion 1 be $tw_L$ (mm), the outer outline area of the land portion 1 as illustrated in FIG. 1 and FIGS. 4 to 6 be A (mm$^2$), the maximum width of the land portion 1 in the tire width direction be BW (mm), and BL (mm) = A (mm$^2$) / BW (mm), then

$$\text{Equivalent number of sipes Neq} = (tw_m + tw_L) \,/\, BW,$$

$$\text{Average sipe interval Iave} = BL \,/\, (Neq + 1),$$

$$\text{Total sipe density SDt} = 1 \,/\, Iave = (Neq + 1) \,/\, BL$$
$$= (tw_m + tw_L + BW) \,/\, A,$$

$$\text{Micro sipe density SDm} = (tw_m + BW) \,/\, A,$$

are respectively expressed as follows,
The micro sipe density SDm preferably satisfies the following relational expression,

$$SDt \geq SDm \geq SDt \times 0.5$$

In this way, in a configuration combining micro sipes 3 and long sipes 5, by increasing the density of micro sipes (micro sipe density SDm) relative to the overall sipe density (total sipe density SDt), the effect of improving drainage performance by micro sipes 3, which have little effect on rigidity reduction, is enhanced, and together with the improvement in drainage performance by long sipes 5, on-ice gripping performance can be further improved.

For the same reason, it is more preferable that the micro sipe density SDm is not less than SDt $\times$ 0.54, and even more preferable that it is not less than SDt $\times$ 0.6.

Here, "outer outline area" refers to the area enclosed by the outer outline in a developed view of the tread surface, and therefore, even if noncontact portions such as sipes, small holes, or narrow grooves are disposed within the land portion, it means the area without excluding the area of such sipes, small holes, or narrow grooves.

Further, when the maximum groove depth of the groove defining the land portion 1 is H (mm),

$$SDt \geq 0.6 \,/\, H$$

is preferably satisfied. This is because, by increasing the sipe density, drainage performance can be improved and on-ice gripping performance can be further improved. For the same reason, it is more preferable that SDt $\geq$ 0.8 / H is satisfied.

The average sipe interval is preferably Iave $\leq$ 1.8H (that is, it is preferable that SDt $\geq$ 1 / (1.8H) is satisfied).

Also, it is preferable that the total sipe density SDt is not less than 0.14 (1/mm). This is because, by increasing the sipe density, drainage performance can be improved and on-ice gripping performance can be further improved.

In the pneumatic tire of the present embodiment, the minimum sipe depth h2 in the extension direction of the second element 32 is smaller than the maximum sipe depth h1 in the extension direction of the first element 31. As a result, it is possible to reinforce the thin plate portion of the mold corresponding to the sipe used in tire manufacturing and make it less susceptible to buckling, while suppressing a decrease in the rigidity of the second element 32 and suppressing a decrease in the rigidity of the land portion 1 without reducing the drainage performance by the first element 31, which is effective for on-ice gripping performance, thereby effectively improving on-ice gripping performance.

As described above, according to the pneumatic tire of the present embodiment, on-ice gripping performance can be improved.

On the surface of the land portion 1, a large number of linear shallow sipes can be arranged. The depth h3 of the shallow sipe is preferably $h3 \leq 0.5 \times h1$ with respect to the maximum depth h1 of the first element 31 of the micro sipe 3. The extension direction of the shallow sipe may be the same as or may intersect with the extension direction of the first element 31 of the micro sipe 3. Also, the shallow sipe may connect micro sipes 3 to each other.

The difference between the inclination angle of the width direction edge 2 with respect to the tire width direction and the inclination angle of the first element 31 of the micro sipe 3 with respect to the tire width direction is preferably not more than 10°, and more preferably substantially parallel. Here, "the inclination angle of the width direction edge 2 with respect to the tire width direction" refers to the inclination angle with respect to the tire width direction of a straight line connecting the two intersection points of the width direction edge 2 when both ends of the first element 31 of the micro sipe 3 are projected in the tire circumferential direction. However, when the first element 31 is connected to the second element 32 in a curved manner, it refers to the inclination angle with respect to the tire width direction of a straight line connecting one end of the first element 31 and a point on the first element 31 that is separated by 30% of the width in the tire width direction, when the micro sipe 3 is projected in the tire circumferential direction, from one end of the first element 31 in the tire width direction. Also, "the inclination angle of the first element 31 of the micro sipe 3 with respect to the tire width direction" refers to the inclination angle with respect to the tire width direction of a straight line connecting both ends of the first element 31 of the micro sipe 3. Further, the depth of the first element 31 may be varied for each micro sipe row 4, and it is preferable that the maximum groove depth h1 of the first element 31 of the micro sipes 3 constituting the micro sipe row 4 on the side closer to the width direction edge 2 is shallower. This is because it is possible to ensure the rigidity of the land portion 1. The micro sipe 3 may further have a third element, and for example, the micro sipe 3 may be Y-shaped. The micro sipe 3 and the long sipe 5 may be arranged so as to at least partially overlap when projected in the tire width direction. In addition to the micro sipe 3 and the long sipe 5, other types of sipes (for example, pores (pin sipes), three-dimensional sipes, flask sipes, etc.) may be provided. A three-dimensional sipe may be applied to the first element 31 of the micro sipe 3. Here, "three-dimensional sipe" refers to a sipe whose inner wall surface is uneven along the depth direction. The three-dimensional sipe may be, for example, a sipe extending while bending in the depth direction, or a sipe extending while changing in a wavy shape in the depth direction, but is not particularly limited to these examples.

When the land portion 1 is defined by a width direction groove, the shortest distance between the tire circumferential end of the micro sipe 3 and the width direction groove can be 1 mm to 10 mm. This is because, by making the shortest distance not less than 1 mm, it is possible to suppress the occurrence of cracks or chipping. Also, by making it not more than 10 mm, the micro sipes 3 can be densely arranged. For the same reason, when the land portion 1 is defined by a circumferential main groove, the shortest distance between the tire width direction end of the micro sipe 3 and the circumferential main groove can be 1 mm to 10 mm. Also, the shortest distance between micro sipes 3 can be 1 mm to 10 mm.

In the above examples, the land portion is exemplified as a block, but the present disclosure is not limited to this case, and the land portion may be defined only by width direction grooves or only by inclined grooves.

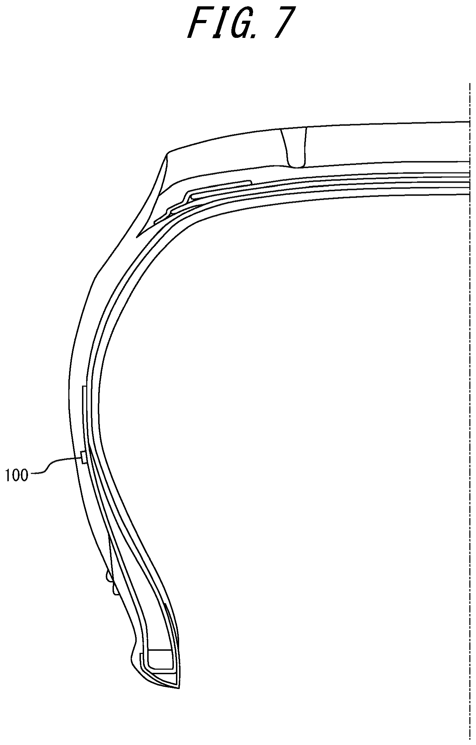

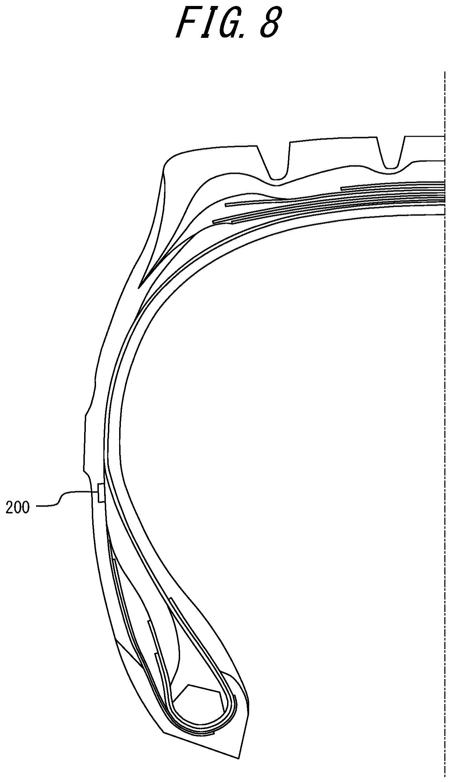

FIG. 7 is a cross-sectional view in the tire width direction illustrating an example of a tire structure. FIG. 8 is a cross-sectional view in the tire width direction illustrating another example of a tire structure.

The tire may be provided with an RF tag as the communication device 100, 200. The RF tag includes an IC chip and an antenna. The RF tag may, for example, be sandwiched and disposed between a plurality of members, either of the same or different types, constituting the tire. By doing so, it becomes easier to attach the RF tag during tire production, thereby improving the productivity of tires equipped with RF tags. In this example, the RF tag may, for example, be sandwiched and disposed between the bead filler and another member adjacent to the bead filler.

The RF tag may also be embedded within any member constituting the tire. By doing so, compared to the case where the RF tag is sandwiched and disposed between a plurality of members constituting the tire, the load applied to the RF tag can be reduced. As a result, the durability of the RF tag can be improved. In this example, the RF tag may, for example, be embedded within a rubber member such as tread rubber or side rubber.

It is preferable that the RF tag is not disposed at a position that serves as a boundary between members having different rigidity in the peripheral length direction, which is the direction along the outer surface of the tire in a cross-sectional view in the tire width direction. By doing so, the RF tag is not disposed at a position where strain is likely to concentrate due to a rigidity step. Therefore, the load applied to the RF tag can be reduced. As a result, the durability of the RF tag can be improved. In this example, it is preferable that the RF tag is not disposed at a position that serves as a boundary between the end of the carcass and a member (such as side rubber) adjacent to the end of the carcass in a cross-sectional view in the tire width direction.

The number of RF tags is not particularly limited. The tire may be provided with only one RF tag, or may be provided with two or more RF tags. Here, the RF tag is illustrated and described as an example of the communication device, but a communication device different from the RF tag may also be used.

The RF tag may, for example, be disposed in the tread portion of the tire. By doing so, the RF tag is not damaged by a side cut of the tire.

The RF tag may, for example, be disposed in the central portion of the tread in the tire width direction. The central portion of the tread is a position in the tread portion where flexing is less likely to concentrate. By doing so, the load applied to the RF tag can be reduced. As a result, the durability of the RF tag can be improved. Furthermore, it is possible to suppress the occurrence of differences in communication with the RF tag from both outer sides of the tire in the tire width direction. In this example, the RF tag may, for example, be disposed within a range of 1/2 of the tread width centered on the tire equatorial plane in the tire width direction.

The RF tag may, for example, be disposed at the tread edge in the tire width direction. When the position of the reader that communicates with the RF tag is predetermined, the RF tag may, for example, be disposed at one tread edge on the side closer to the reader. In this example, the RF tag may, for example, be disposed within a range of 1/4 of the tread width, with the tread edge as the outer end, in the tire width direction.

The RF tag may, for example, be disposed on the tire cavity side relative to the carcass including one or more carcass plies spanning between the bead portions. By doing so, the RF tag becomes less susceptible to damage from external impacts, side cuts, or nail punctures. As one example, the RF tag may be disposed in close contact with the surface of the carcass on the tire cavity side. As another example, when another member is present on the tire cavity side relative to the carcass, the RF tag may, for example, be disposed between the carcass and the other member located on the tire cavity side relative to the carcass. As an example of another member located on the tire cavity side relative to the carcass, an inner liner forming the inner surface of the tire may be mentioned. As another example, the RF tag may be attached to the inner surface of the tire facing the tire cavity. By configuring the RF tag to be attached to the inner surface of the tire, the attachment of the RF tag to the tire and the inspection or replacement of the RF tag can be easily performed. That is, the attachability and maintainability of the RF tag can be improved. Furthermore, by attaching the RF tag to the inner surface of the tire, it is possible to prevent the RF tag from becoming a nucleus of tire failure compared to a configuration in which the RF tag is embedded in the tire.

In addition, when the carcass includes a plurality of carcass plies and there is a position where the plurality of carcass plies are stacked, the RF tag may be disposed between the stacked carcass plies.

The RF tag may, for example, be disposed on the outer side in the tire radial direction relative to the belt including one or more belt plies in the tread portion of the tire. As one example, the RF tag may be disposed in close contact with the belt on the outer side in the tire radial direction relative to the belt. As another example, when a belt reinforcement layer is provided, the RF tag may be disposed in close contact with the belt reinforcement layer on the outer side in the tire radial direction relative to the belt reinforcement layer. As another example, the RF tag may be embedded in the tread rubber on the outer side in the tire radial direction relative to the belt. By disposing the RF tag on the outer side in the tire radial direction relative to the belt in the tread portion of the tire, communication with the RF tag from the outside of the tire in the tire radial direction is less likely to be hindered by the belt. Therefore, communication with the RF tag from the outside of the tire in the tire radial direction can be improved.

Furthermore, the RF tag may, for example, be disposed on the inner side in the tire radial direction relative to the belt in the tread portion of the tire. By doing so, the outer side of the RF tag in the tire radial direction is covered by the belt, so the RF tag becomes less susceptible to damage from impacts or nail punctures from the tread surface. As one example, the RF tag may be disposed between the belt and the carcass located on the inner side in the tire radial direction relative to the belt in the tread portion of the tire.

In addition, when the belt includes a plurality of belt plies, the RF tag may be disposed between any two belt plies in the tread portion of the tire. By doing so, the outer side of the RF tag in the tire radial direction is covered by one or more belt plies, so the RF tag becomes less susceptible to damage from impacts or nail punctures from the tread surface.

In tires for trucks and buses, the RF tag may, for example, be sandwiched and disposed between the cushion rubber and the tread rubber, or between the cushion rubber and the side rubber. By doing so, impacts on the RF tag can be mitigated by the cushion rubber. Therefore, the durability of the RF tag can be improved.

Furthermore, the RF tag may, for example, be embedded within the cushion rubber. In addition, the cushion rubber may be composed of a plurality of rubber members of the same or different types that are adjacent to each other. In such a case, the RF tag may be sandwiched and disposed between the plurality of rubber members constituting the cushion rubber.

The RF tag may, for example, be disposed at the position of the sidewall portion or bead portion of the tire. The RF tag may, for example, be disposed at one sidewall portion or one bead portion on the side closer to a reader capable of communicating with the RF tag. By doing so, communication between the RF tag and the reader can be enhanced. As one example, the RF tag may be disposed between the carcass and the side rubber, or between the tread rubber and the side rubber.

The RF tag may, for example, be disposed between the position of the tire maximum width and the position of the tread surface in the tire radial direction. By doing so, compared to a configuration in which the RF tag is disposed on the inner side in the tire radial direction relative to the position of the tire maximum width, communication with the RF tag from the outside of the tire in the tire radial direction can be enhanced.

The RF tag may, for example, be disposed on the inner side in the tire radial direction relative to the position of the tire maximum width. By doing so, the RF tag is disposed near the bead portion, which has high rigidity. Therefore, the load applied to the RF tag can be reduced. As a result, the durability of the RF tag can be improved. As one example, the RF tag may be disposed at a position adjacent to the bead core in the tire radial direction or tire width direction. The vicinity of the bead core is less likely to concentrate strain. Therefore, the load applied to the RF tag can be reduced. As a result, the durability of the RF tag can be improved.

In particular, it is preferable that the RF tag is disposed on the inner side in the tire radial direction relative to the position of the tire maximum width and on the outer side in the tire radial direction relative to the bead core of the bead portion. By doing so, the durability of the RF tag can be improved, and communication between the RF tag and the reader is less likely to be hindered by the bead core, thereby enhancing the communication performance of the RF tag.

Furthermore, when the side rubber is composed of a plurality of rubber members of the same or different types that are adjacent to each other in the tire radial direction, the RF tag may be sandwiched and disposed between the plurality of rubber members constituting the side rubber.

In tires for passenger vehicles, the RF tag may be sandwiched and disposed between the bead filler and a member adjacent to the bead filler. By doing so, the RF tag can be disposed at a position where strain is less likely to concentrate due to the arrangement of the bead filler. Therefore, the load applied to the RF tag can be reduced. As a result, the durability of the RF tag can be improved.

The RF tag may, for example, be sandwiched and disposed between the bead filler and the carcass. The portion of the carcass that sandwiches the RF tag together with the bead filler may be located on the outer side in the tire width direction relative to the bead filler, or may be located on the inner side in the tire width direction. When the portion of the carcass that sandwiches the RF tag together with the bead filler is located on the outer side in the tire width direction relative to the bead filler, the load applied to the RF tag due to impacts or damage from the outer side of the tire in the tire width direction can be further reduced. As a result, the durability of the RF tag can be further improved.

In addition, the bead filler may include a portion disposed adjacent to the side rubber. In such a case, the RF tag may be sandwiched and disposed between the bead filler and the side rubber.

Furthermore, the bead filler may include a portion disposed adjacent to the rubber chafer. In such a case, the RF tag may be sandwiched and disposed between the bead filler and the rubber chafer.

In tires for trucks and buses, the RF tag may be sandwiched and disposed between the stiffener and a member adjacent to the stiffener. By doing so, the RF tag can be disposed at a position where strain is less likely to concentrate due to the arrangement of the stiffener. Therefore, the load applied to the RF tag can be reduced. As a result, the durability of the RF tag can be improved. The RF tag may, for example, be sandwiched and disposed between the stiffener and the side rubber.

Furthermore, the RF tag may, for example, be sandwiched and disposed between the stiffener and the carcass. The portion of the carcass that sandwiches the RF tag together with the stiffener may be located on the outer side in the tire width direction relative to the stiffener, or may be located on the inner side in the tire width direction. When the portion of the carcass that sandwiches the RF tag together with the stiffener is located on the outer side in the tire width direction relative to the stiffener, the load applied to the RF tag due to impacts or damage from the outer side of the tire in the tire width direction can be further reduced. As a result, the durability of the RF tag can be further improved.

The stiffener may include a portion disposed adjacent to the rubber chafer. In such a case, the RF tag may be sandwiched and disposed between the stiffener and the rubber chafer.

The stiffener may include a portion disposed adjacent to the hat rubber on the outer side in the tire width direction. In such a case, the RF tag may be sandwiched and disposed between the stiffener and the hat rubber.

The stiffener may be composed of a plurality of rubber members having different hardness. In such a case, the RF tag may be sandwiched and disposed between the plurality of rubber members constituting the stiffener.

The RF tag may be sandwiched and disposed between the hat rubber and a member adjacent to the hat rubber. The RF tag may, for example, be sandwiched and disposed between the hat rubber and the carcass ply. By doing so, impacts on the RF tag can be mitigated by the hat rubber. Therefore, the durability of the RF tag can be improved.

The RF tag may, for example, be sandwiched and disposed between the rubber chafer and the side rubber. By doing so, the RF tag can be disposed at a position where strain is less likely to concentrate due to the arrangement of the rubber chafer. Therefore, the load applied to the RF tag can be reduced. As a result, the durability of the RF tag can be improved.

The RF tag may, for example, be sandwiched and disposed between the rubber chafer and the carcass. By doing so, the load applied to the RF tag due to impacts or damage from the rim can be reduced. Therefore, the durability of the RF tag can be improved.

In tires for trucks and buses, the RF tag may be sandwiched and disposed between the nylon chafer and another member adjacent to the nylon chafer on the outer or inner side in the tire width direction. By doing so, the position of the RF tag is less likely to fluctuate during tire deformation. Therefore, the load applied to the RF tag during tire deformation can be reduced. As a result, the durability of the RF tag can be improved.

The nylon chafer may, for example, include a portion disposed adjacent to the rubber chafer on the outer side in the tire width direction. In such a case, the RF tag may be sandwiched and disposed between the nylon chafer and the rubber chafer. The nylon chafer may, for example, include a portion disposed adjacent to the side rubber on the outer side in the tire width direction. In such a case, the RF tag may be sandwiched and disposed between the nylon chafer and the side rubber.

The nylon chafer may, for example, include a portion disposed adjacent to the stiffener on the inner side in the tire width direction. In such a case, the RF tag may be sandwiched and disposed between the nylon chafer and the stiffener. Furthermore, the nylon chafer may, for example, include a portion disposed adjacent to the hat rubber on the inner side in the tire width direction. In such a case, the RF tag may be sandwiched and disposed between the nylon chafer and the hat rubber. Furthermore, the nylon chafer may, for example, include a portion disposed adjacent to the carcass on the inner side in the tire width direction. In such a case, the RF tag may be sandwiched and disposed between the nylon chafer and the carcass. Furthermore, the nylon chafer may, for example, include a portion disposed adjacent to the wire chafer on the inner side in the tire width direction. In such a case, the RF tag may be sandwiched and disposed between the nylon chafer and the wire chafer.

As described above, the RF tag may be sandwiched and disposed between the nylon chafer and another member adjacent to the nylon chafer on the outer or inner side in the tire width direction. In particular, by having the outer side of the RF tag in the tire width direction covered by the nylon chafer, the load applied to the RF tag due to impacts or damage from the outer side of the tire in the tire width direction can be further reduced. Therefore, the durability of the RF tag can be further improved.

The RF tag may be sandwiched and disposed between the wire chafer and another member adjacent to the wire chafer on the inner or outer side in the tire width direction. By doing so, the position of the RF tag is less likely to fluctuate during tire deformation. Therefore, the load applied to the RF tag during tire deformation can be reduced. As a result, the durability of the RF tag can be improved. The other member adjacent to the wire chafer on the inner or outer side in the tire width direction may, for example, be a rubber member such as a rubber chafer. Furthermore, the other member adjacent to the wire chafer on the inner or outer side in the tire width direction may, for example, be the carcass.

In tires for passenger vehicles, a belt reinforcement layer may further be provided on the outer side in the radial direction of the belt. For example, the belt reinforcement layer may be formed by continuously spirally winding cords made of polyethylene terephthalate in the tire circumferential direction. Here, the cord may be subjected to adhesive treatment under a tension of $6.9 \times 10^{-2}$ N/tex or more, and may have an elastic modulus of 2.5 mN/dtex·% or more at a load of 29.4 N measured at 160°C. Furthermore, the belt reinforcement layer may be disposed so as to cover the entire belt or only both end portions of the belt. Furthermore, the winding density per unit width of the belt reinforcement layer may differ depending on the position in the width direction. By doing so, it is possible to reduce road noise and flat spots without decreasing high-speed durability.

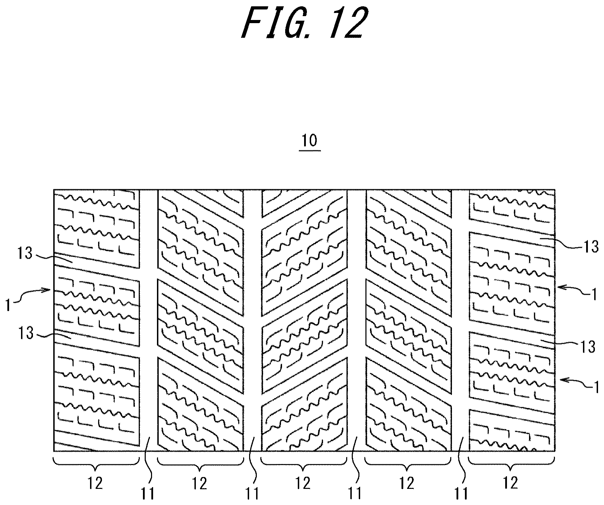

FIG. 12 is a diagram illustrating an example of a pattern in which land portions are applied. In FIG. 12, the tread surface 10 includes one or more (four in the illustrated example) circumferential main grooves 11, and circumferential land portions 12 that are partitioned between the circumferential main grooves 11 or between the circumferential main groove and the tread edge. The circumferential land portions 12 are partitioned into a plurality of land portions 1 by a plurality of width direction grooves 13. The configuration within the land portion 1 is as described above. The configuration among the land portions 1 may be the same or may be different.

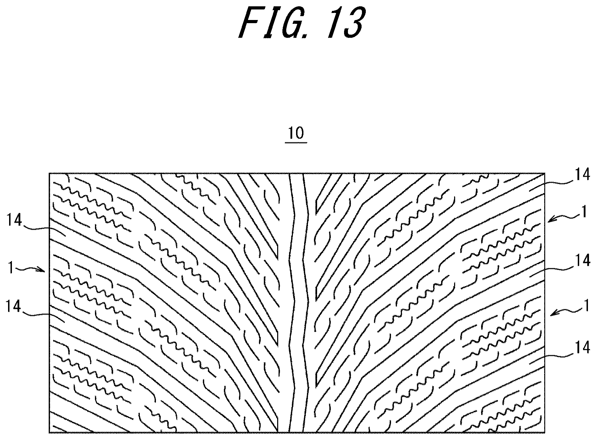

FIG. 13 is a diagram illustrating an example of a pattern in which land portions are applied. In FIG. 13, the tread surface 10 has a plurality of inclined grooves 14 that extend from the tread edge to the vicinity of the tire equatorial plane, and the inclination angle with respect to the tire width direction increases from the outer side to the inner side in the tire width direction. In the illustrated example, one circumferential main groove 11 is provided, but a pattern without a circumferential main groove 11 may be adopted, or a pattern with two or more circumferential main grooves 11 may be adopted. In this example, the inclined grooves 14 have two bent portions, so that the inclination angle with respect to the tire width direction increases from the outer side to the inner side in the tire width direction, but the number of bending points is not particularly limited, or a smoothly curved shape in which the inclination angle with respect to the tire width direction gradually increases from the outer side to the inner side in the tire width direction may be adopted. In this example, each of the plurality of land portions 1 is partitioned by the circumferential main groove 1 and the inclined groove 14. The configuration within the land portion 1 is as described above. The configuration among the land portions 1 may be the same or may be different.

Hereinafter, examples of the present disclosure will be described, but the present disclosure is not limited to the following examples.

EXAMPLES

(Example 1)

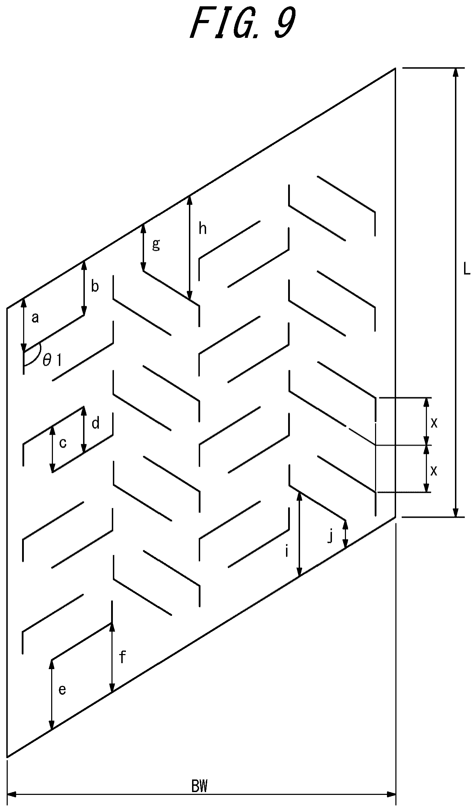

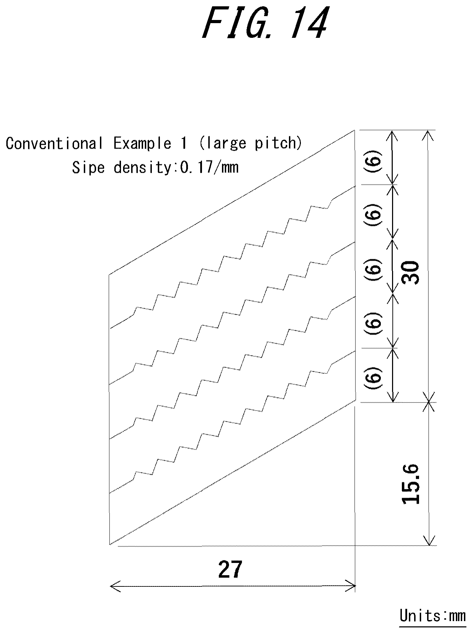

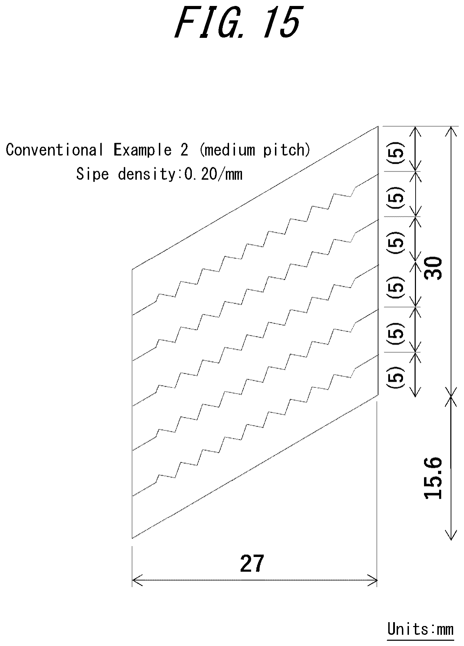

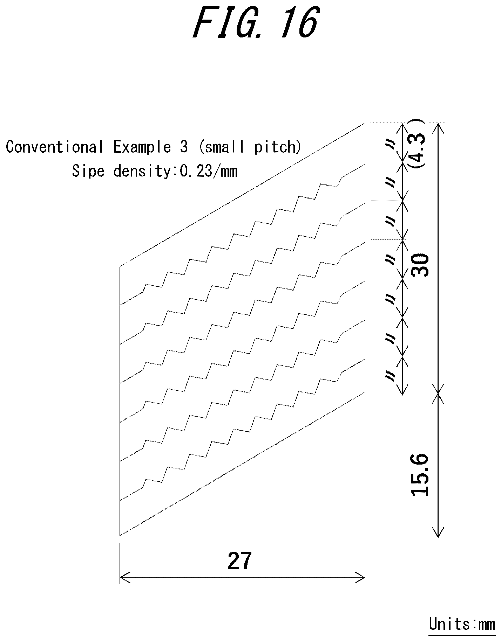

First, in order to confirm the effect of using micro sipes, three blocks (FIGS. 14 to 16) according to Conventional Examples 1 to 3 were prepared by changing the sipe density by varying the circumferential spacing of long sipes extending between block side edges in a block of block size (side edge length 30 mm × width 27 mm). In addition, as a comparative example, a block according to Comparative Example 1 was prepared, in which the sipe arrangement consists of micro sipes as illustrated in FIG. 9, and the first element extends in a direction different from the width direction edge closest to the first element. The block size is the same as in Conventional Examples 1 to 3. In FIG. 9, a = 3.1 (mm), b = 3.1 (mm), c = 3.1 (mm), d = 3.1 (mm), e = 4.7 (mm), f = 4.7 (mm), g = 2.9 (mm), h = 7.8 (mm), i = 6.8 (mm), and j = 1.9 (mm).

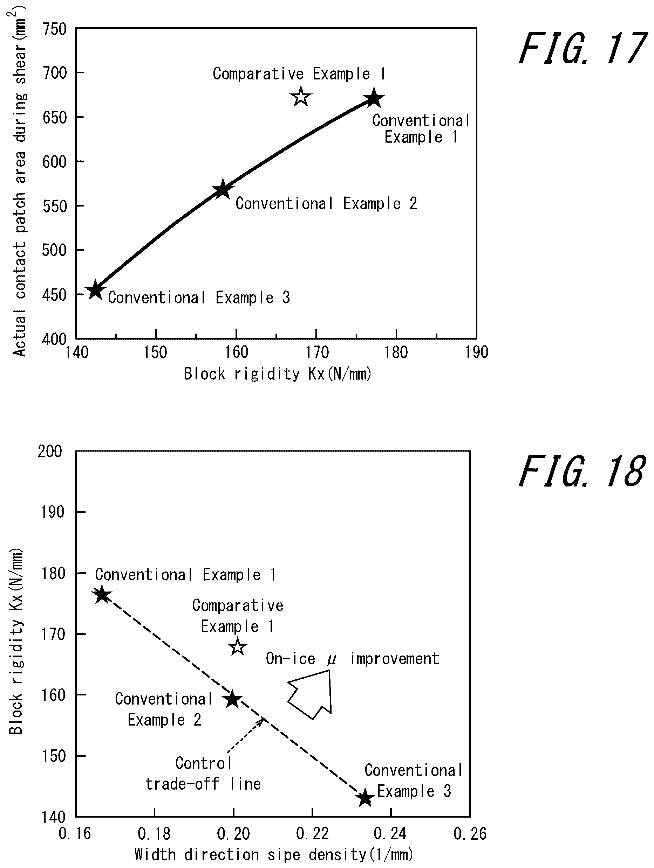

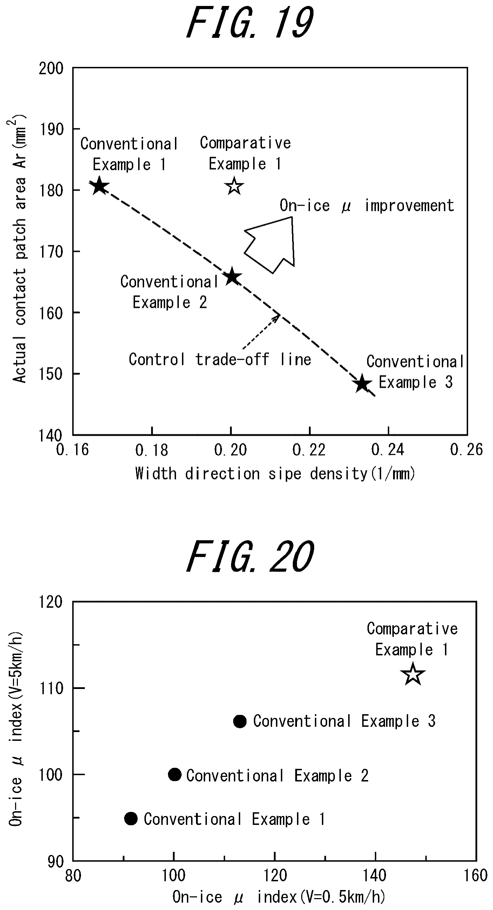

For the above Conventional Examples 1 to 3 and Comparative Example 1, block rigidity and actual contact patch area were simulated. In general, as block rigidity increases, the actual contact patch area increases, but as illustrated in FIG. 17, in Comparative Example 1, the effect of increasing the actual contact patch area is higher compared to Conventional Examples 1 to 3. Further, as illustrated in FIGS. 18 and 19, in Comparative Example 1, the trade-off line between block rigidity and actual contact patch area reduction due to increased sipe density is improved compared to Conventional Examples 1 to 3.

In order to actually confirm the above effects, blocks corresponding to Conventional Examples 1 to 3 and Comparative Example 1 were actually prototyped, and a test was conducted to evaluate the on-ice friction coefficient when the blocks were moved on ice. The test conditions were: ice temperature -2°C, ground contact pressure P = 250 kPa, inclination angle of the block width direction edge with respect to the tire width direction 30°, rhombic block dimensions: side edge length 30 mm × width 27 mm, micro sipe depth and long sipe depth 6.7 mm. As illustrated in FIG. 20, in Comparative Example 1, the on-ice friction coefficient increased compared to Conventional Examples 1 to 3 under both low-speed (0.5 km/h) and high-speed (5 km/h) speed conditions. From this, it can be seen that the use of micro sipes can improve on-ice gripping performance.

(Example 2)

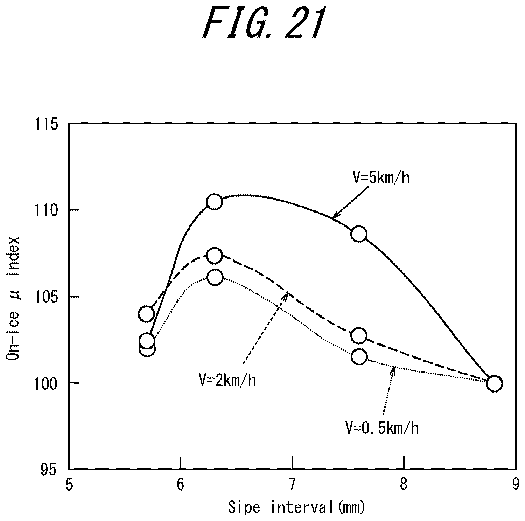

Next, in order to confirm the effect of "the first element extends in the same direction as the width direction edge closest to the first element," the relationship between the spacing between sipes and between sipes and the width direction edge (horizontal axis in FIG. 21) and the on-ice friction coefficient (vertical axis in FIG. 21) was measured. As illustrated in FIG. 21, it was found that there is an optimum point (optimum region) for the spacing between sipes and between sipes and the width direction edge (for any speed). From this, by "the first element extends in the same direction as the width direction edge closest to the first element," the spacing between the first element and the width direction edge can be kept within the optimum region over the extension length of the first element, so that the on-ice friction coefficient can be increased and the on-ice gripping performance can be improved.

(Example 3)

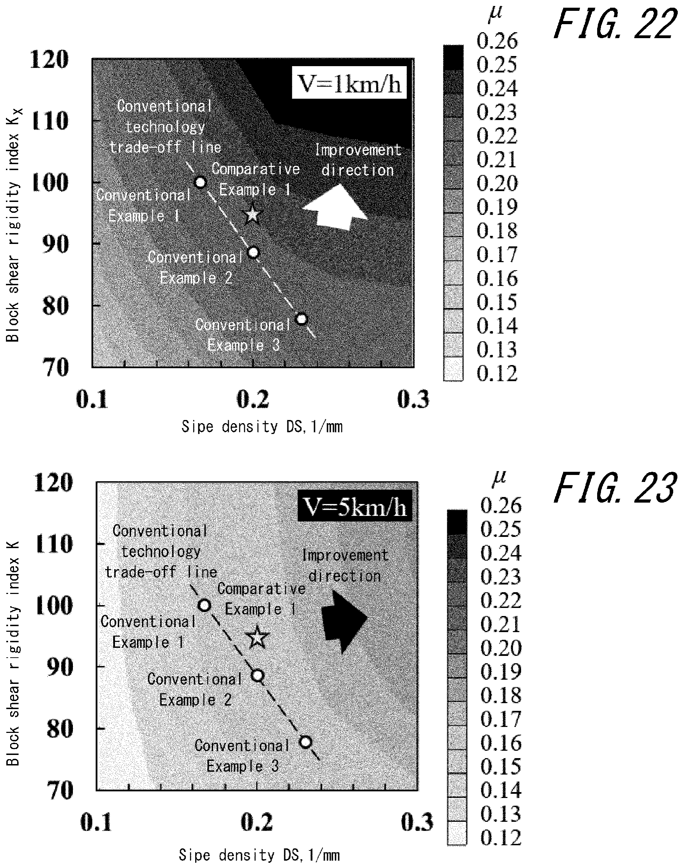

To improve the on-ice friction coefficient, increasing the sipe density and block rigidity is effective, but the contribution of each varies depending on the slip speed. As illustrated in FIG. 22, at low speed, since the melting of ice on the friction surface is small and the friction coefficient is large, the contribution of block rigidity is large. On the other hand, as illustrated in FIG. 23, at high speed, since the melting of ice on the friction surface increases and the friction coefficient decreases, the need to effectively drain the meltwater on the friction surface increases, and the contribution of increased sipe density and drainage performance becomes significant. Therefore, in order to stably exhibit a high on-ice friction coefficient from low speed to high speed, that is, from when the amount of melting on the ice surface is small to when it is large, it is required to achieve both high block rigidity and high sipe density/drainage performance at a high level.

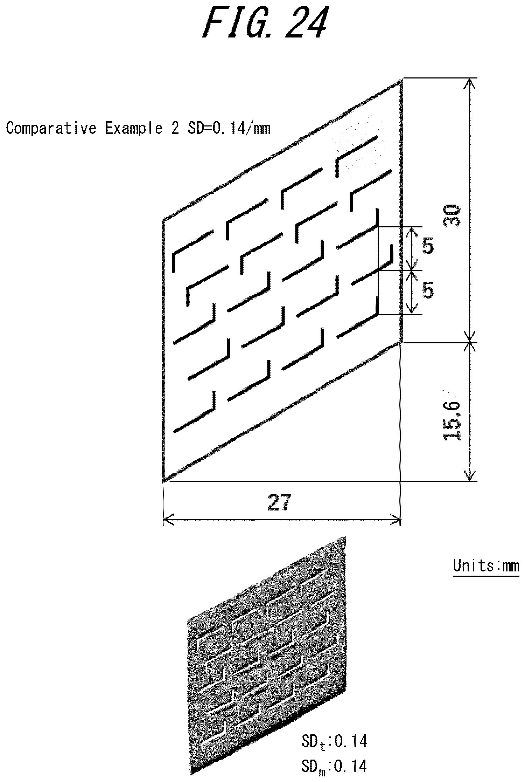

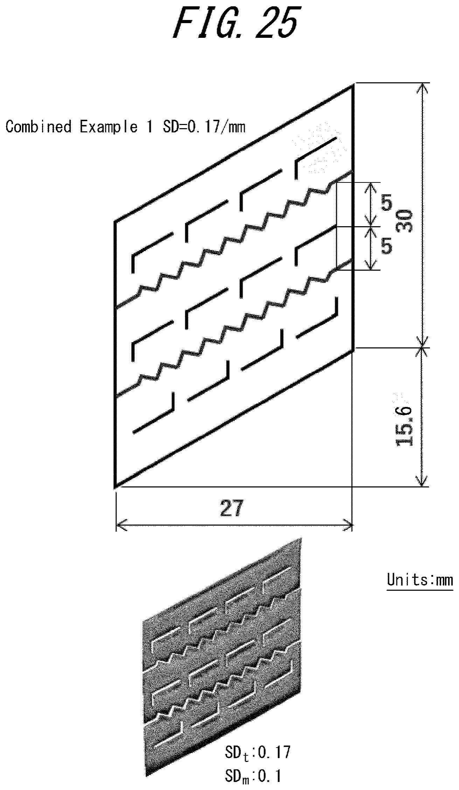

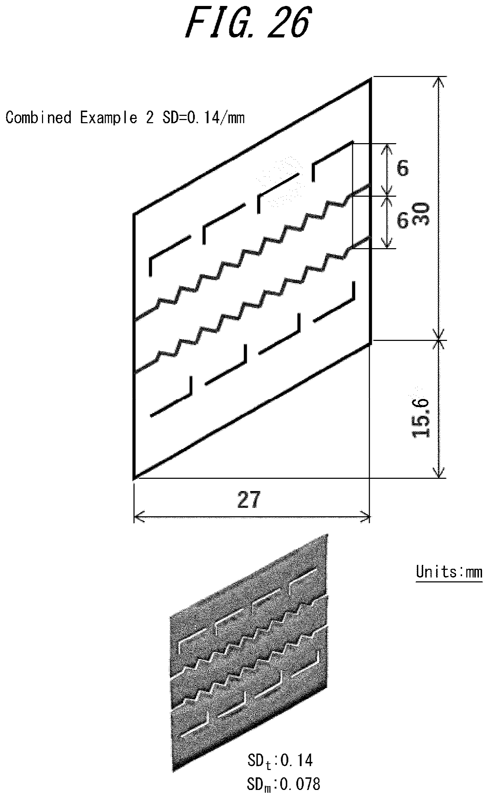

For simulation of the floating of the contact patch (actual contact patch area), blocks as illustrated in FIGS. 24, 25, and 26 were prepared. The inclination angle of the block width direction edge with respect to the tire width direction is 30°, rhombic block dimensions: side edge length 30 mm × width 27 mm, micro sipe depth and long sipe depth 6.7 mm. As illustrated in the lower diagrams of FIGS. 24, 25, and 26, even when long sipes are present (FIGS. 25 and 26), if combined with micro sipes, the floating of the contact patch can be suppressed to the same extent as in the case of only micro sipes (FIG. 24). This is considered to be because the land portion is made continuous by the micro sipes, making it difficult for low-rigidity portions to be formed. In the block of FIG. 25, compared to the block of FIG. 24, a higher sipe density is achieved at the same sipe spacing (5 mm). In the block of FIG. 26, compared to the block of FIG. 24, at the same sipe density, the sipe spacing increases (6 mm).

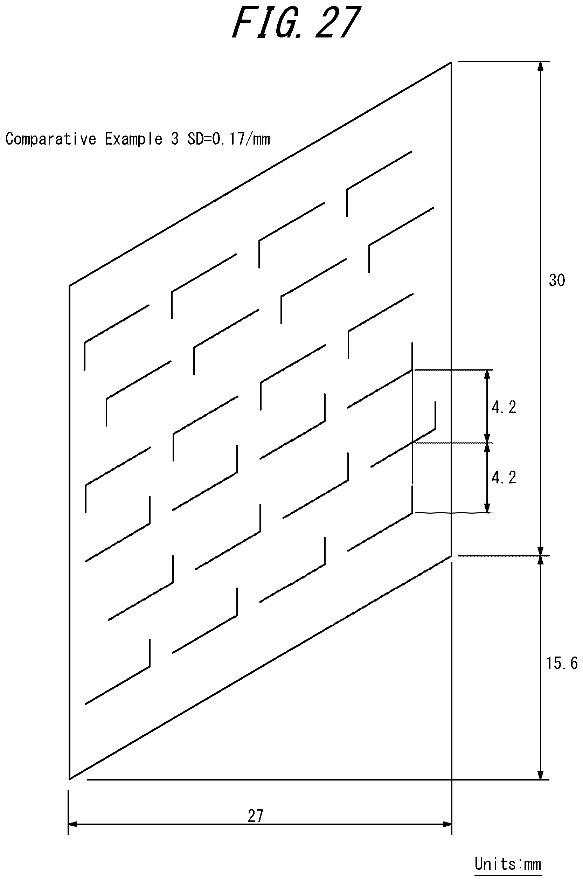

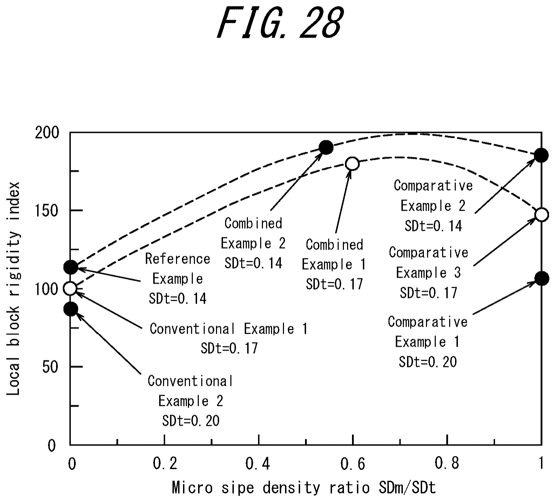

As examples combining micro sipes and long sipes, Combined Example 1 (FIG. 25) and Combined Example 2 (FIG. 26) were prepared, and as comparative examples using only micro sipes, Comparative Example 1 (described in Example 1), Comparative Example 2 (FIG. 24), and Comparative Example 3 (FIG. 27) were prepared. In addition, Conventional Examples 1 and 2 (described in Example 1) using only long sipes were prepared. Further, reference examples with different sipe densities from Conventional Examples 1 and 2, using only long sipes, were prepared. The local block rigidity of these was calculated. As illustrated in FIG. 28, compared to conventional examples (reference examples) and comparative examples with the same sipe density SDt, the combined examples have higher block rigidity.

(Example 4)

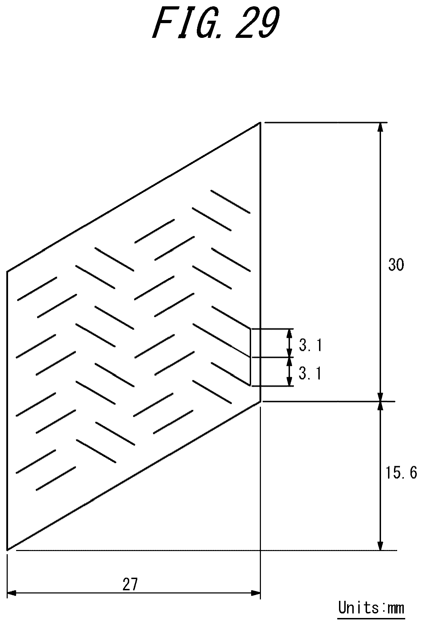

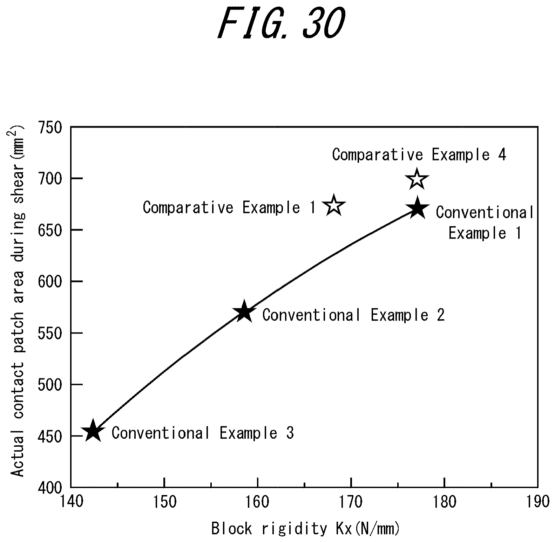

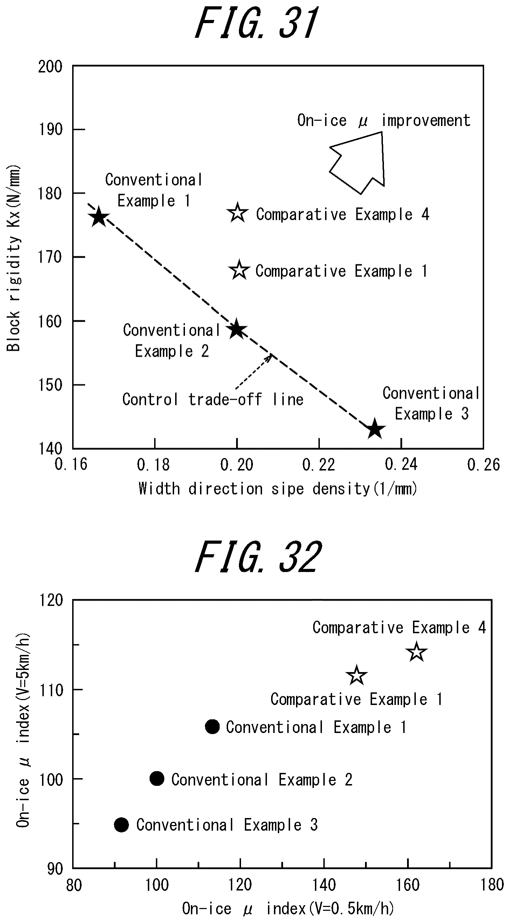

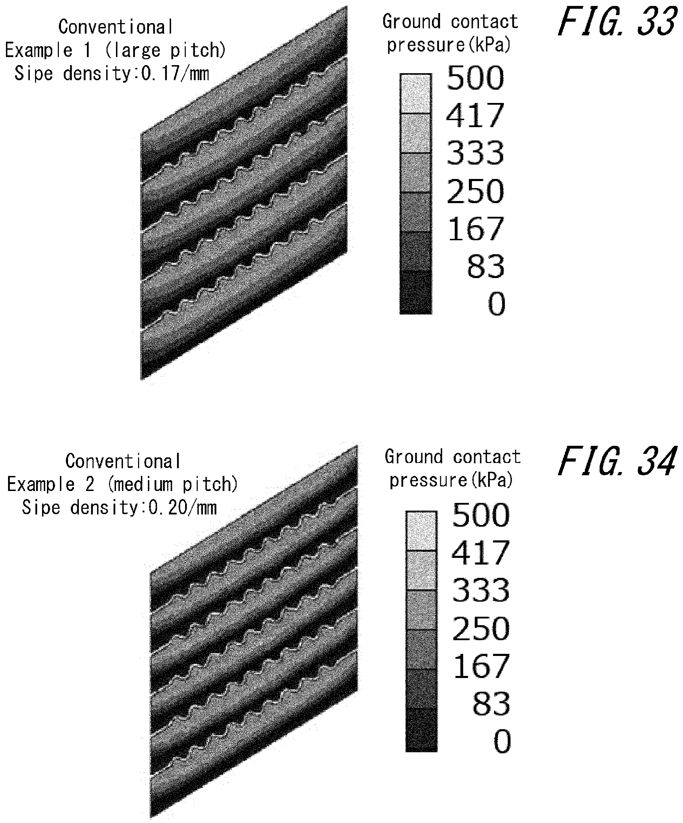

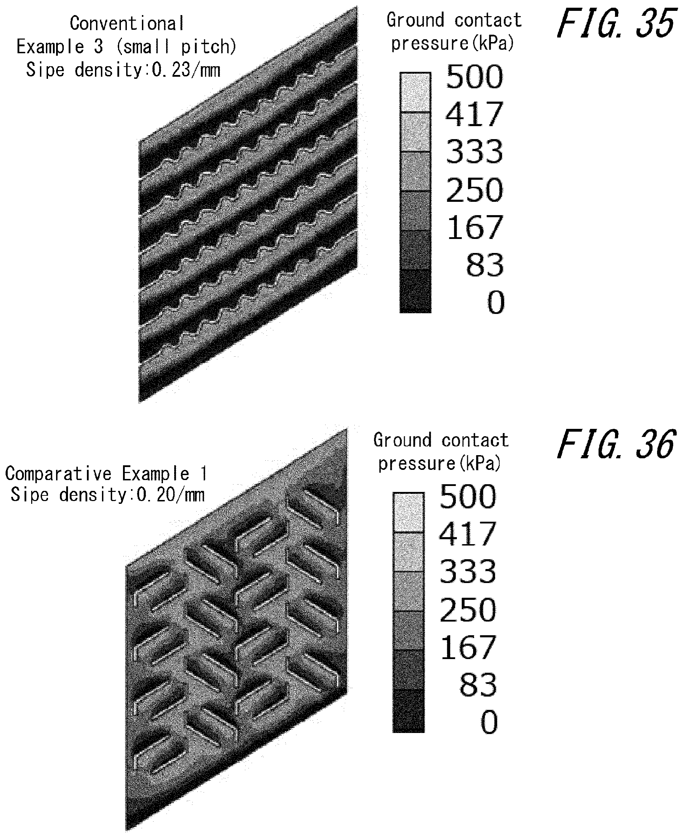

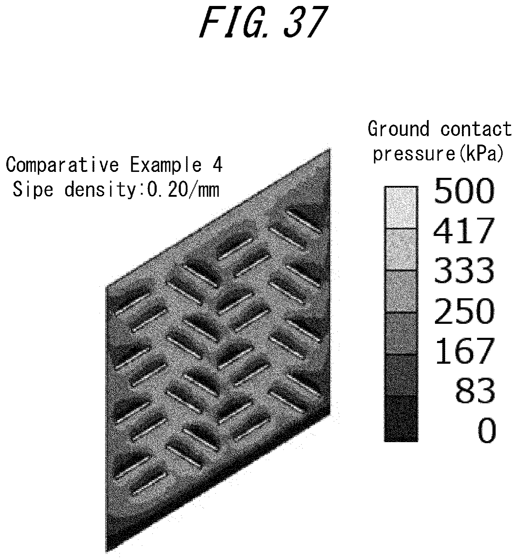

A block according to Comparative Example 4 as illustrated in FIG. 29 was prepared. Block rigidity and actual contact patch area were simulated. As illustrated in FIGS. 30 and 31, Comparative Example 4 exhibits a greater effect of increasing block rigidity and actual contact patch area compared to Comparative Example 1 (described in Example 1). Further, as a result of measurement in an on-ice friction test at an ice temperature of -2°C, as illustrated in FIG. 32, Comparative Example 4 exhibits an increased on-ice friction coefficient compared to Comparative Example 1 (described in Example 1). As illustrated in FIGS. 33 to 37, Comparative Example 1, compared to Conventional Examples 1 to 3, achieves an effect of increasing block rigidity and actual contact patch area, but since it has a second element, the rigidity in that portion decreases, and the effect of increasing block rigidity and actual contact patch area is not as great as in Comparative Example 4. On the other hand, the sipe shape as illustrated in Comparative Example 4 has a concern regarding mold durability, as the thin plate portion corresponding to the sipe in the mold is prone to buckling.

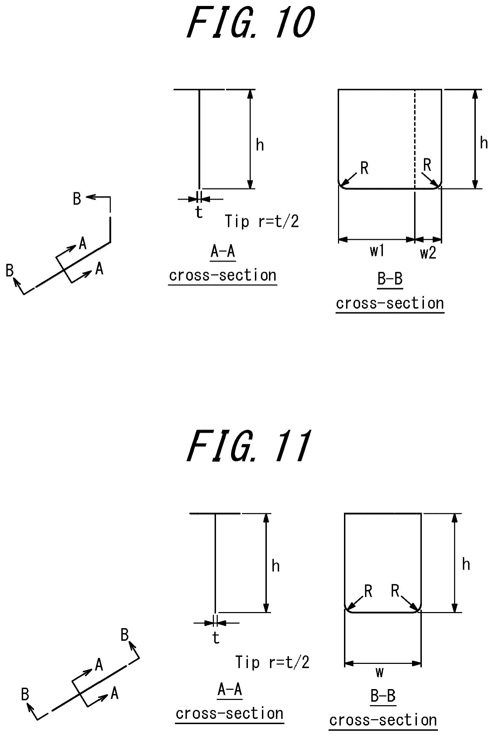

In Comparative Example 1, as illustrated in FIG. 10, h1 = h2 = h, and in Comparative Example 4, as illustrated in FIG. 11, there is no second element. In addition, while the planar view is the same as in Comparative Example 1, Raised Bottom Examples 1 and 2, in which h2 is made smaller than h1 as in FIGS. 2 and 3, were prepared. The sipe width is 0.5 mm, and the bending angle θ1 of the second element is 150°. Mold durability was calculated by calculating the buckling resistance and the buckling resistance index Z/h index, and the on-ice performance was calculated by calculating the predicted index values of the on-ice friction coefficient at V = 0.5 km/h and V = 5 km/h.

[Table 1]

|  | Conventional Example 2 | Comparative Example 1 | Comparative Example 4 | Raised Bottom Example 1 | Raised Bottom Example 2 |
|---|---|---|---|---|---|
| w1 (mm) | 27 | 4.9 | 4.9 | 4.9 | 4.9 |
| w2 (mm) | - | 1.5 | 0 | 1.5 | 1.5 |
| h1 (mm) | 6.7 | 6.7 | 6.7 | 6.7 | 6.7 |
| h2 (mm) | - | 6.7 | - | 4.6 | 4.6 |
| Mold durability (INDEX) | 100 | 103 | 28 | 86 | 95 |
| On-ice performance (V=0.5 km/h) | 100 | 147 | 162 | 155 | 151 |
| On-ice performance (V=5 km/h) | 100 | 112 | 114 | 113 | 113 |

As indicated in Table 1, in Raised Bottom Examples 1 and 2, it can be seen that on-ice gripping performance can be improved while maintaining mold durability substantially equivalnet to Comparative Example 1.

REFERENCE SIGNS LIST

1: land portion, 2: width direction edge, 3: micro sipe,
31: first element, 32: second element, 4: micro sipe row, 5: long sipe,
10: tread surface, 11: circumferential main groove, 12: circumferential land portion,
13: width direction groove, 14: inclined groove,
100, 200: communication device

**Claims**

1. A pneumatic tire comprises at least one land portion on a tread surface, wherein

a plurality of micro sipes are disposed in at least one of the land portions,

the micro sipes each have a first element and a second element extending in a direction different from the first element from one end of the first element,
an extension length of the second element is shorter than an extension length of the first element,
one end of the first element and one end of the second element are in communication,
the other end of the first element terminates within the land portion,
the other end of the second element terminates within the land portion, and
a minimum sipe depth h2 in the extension direction of the second element is smaller than a maximum sipe depth h1 in the extension direction of the first element.

2. The pneumatic tire according to claim 1, wherein $h2 \leq h1 \times 0.7$ is satisfied.

3. The pneumatic tire according to claim 1 or 2, wherein the second element is formed such that the sipe depth becomes shallower toward the other end of the second element.

4. The pneumatic tire according to any one of claims 1 to 3, wherein the land portion is a block defined by a circumferential main groove extending in a tire circumferential direction and a width direction groove extending in a tire width direction.

# FIG. 1

## FIG. 2

## FIG. 3

## FIG. 4

# FIG. 5

# FIG. 6

# FIG. 7

100

# FIG. 8

200

# FIG. 9

## FIG. 10

B ←

A

B

A

A

h

t

Tip r=t/2

A-A
cross-section

R    R

h

w1    w2

B-B
cross-section

## FIG. 11

B

A

B

A

A

h

t

Tip r=t/2

A-A
cross-section

R   R

h

w

B-B
cross-section

# FIG. 12

*FIG. 13*

# FIG. 14

Conventional Example 1 (large pitch)
Sipe density:0.17/mm

(6)
(6)
(6)
(6)
(6)

30

15.6

27

Units:mm

# FIG. 15

Conventional Example 2 (medium pitch)
Sipe density:0.20/mm

27

30

15.6

(5) (5) (5) (5) (5) (5)

Units:mm

# FIG. 16

Conventional Example 3 (small pitch)
Sipe density:0.23/mm

(4.3)

30

15.6

27

Units:mm

FIG. 17

FIG. 18

## FIG. 19

## FIG. 20

# FIG. 21

FIG. 22

FIG. 23

# FIG. 24

Comparative Example 2 SD=0.14/mm

30

5

5

15.6

27

Units:mm

$SD_t$:0.14
$SD_m$:0.14

# FIG. 25

Combined Example 1 SD=0.17/mm

5
30
5
15.6
27

Units:mm

$SD_t$:0.17
$SD_m$:0.1

# *FIG. 26*

Combined Example 2 SD=0.14/mm

6

6

30

15.6

27

Units:mm

$SD_t$:0.14
$SD_m$:0.078

## *FIG. 27*

Comparative Example 3 SD=0.17/mm

30

4.2

4.2

15.6

27

Units:mm

# FIG. 28

# FIG. 29

30

3. 1

3. 1

15. 6

27

Units:mm

# FIG. 30

## FIG. 31

## FIG. 32

Conventional
Example 1 (large pitch)
Sipe density:0.17/mm

Ground contact
pressure(kPa)

*FIG. 33*

500
417
333
250
167
83
0

Conventional
Example 2 (medium pitch)
Sipe density:0.20/mm

Ground contact
pressure(kPa)

*FIG. 34*

500
417
333
250
167
83
0

Conventional
Example 3 (small pitch)
Sipe density:0.23/mm

Ground contact
pressure(kPa)

500
417
333
250
167
83
0

FIG. 35

Comparative Example 1
Sipe density:0.20/mm

Ground contact
pressure(kPa)

500
417
333
250
167
83
0

FIG. 36

# FIG. 37

Comparative Example 4
Sipe density:0.20/mm

Ground contact
pressure(kPa)

500
417
333
250
167
83
0

## INTERNATIONAL SEARCH REPORT

International application No.

**PCT/JP2023/038578**

| A. | CLASSIFICATION OF SUBJECT MATTER |
|---|---|

***B60C 11/12***(2006.01)i

FI:   B60C11/12 A; B60C11/12 C

According to International Patent Classification (IPC) or to both national classification and IPC

| B. | FIELDS SEARCHED |
|---|---|

Minimum documentation searched (classification system followed by classification symbols)

B60C11/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-1616 A (TOYO TIRE CORPORATION) 09 January 2020 (2020-01-09) claim 1, paragraphs [0015], [0017], drawings | 1-4 |
| X | JP 2010-52683 A (THE YOKOHAMA RUBBER CO., LTD.) 11 March 2010 (2010-03-11) claim 1, paragraphs [0024], [0028], fig. 2 | 1-4 |
| X | JP 2021-154809 A (TOYO TIRE CORPORATION) 07 October 2021 (2021-10-07) claim 1, paragraph [0045], fig. 3(a), 3B | 1-4 |
| A | JP 2010-208379 A (BRIDGESTONE CORPORATION) 24 September 2010 (2010-09-24) whole document | 1-4 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/038578**

| Patent document cited in search report | Publication date (day/month/year) | Patent family member(s) | Publication date (day/month/year) |
|---|---|---|---|
| JP 2020-1616 A | 09 January 2020 | (Family: none) | |
| JP 2010-52683 A | 11 March 2010 | (Family: none) | |
| JP 2021-154809 A | 07 October 2021 | CN 113442661 A | |
| JP 2010-208379 A | 24 September 2010 | (Family: none) | |

Form PCT/ISA/210 (patent family annex) (July 2022)

**EP 4 699 821 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005186827 A